# EUROPEAN PATENT SPECIFICATION

(11) **EP 4 227 134 B1**
(45) Date of publication and mention of the grant of the patent: **09.04.2025**
(21) Application number: 20956628.0
(22) Date of filing: 09.10.2020
(51) Int. Cl.: B60K 6/442, B60K 6/54

(54) **TRANSAXLE DEVICE**
TRANSAXLE-VORRICHTUNG
DISPOSITIF DE BOÎTE-PONT

(43) Date of publication of application: 16.08.2023
(73) Proprietor: NISSAN MOTOR CO., LTD., Kanagawa 221-0023 (JP); Renault s.a.s, 92100 Boulogne Billancourt (FR)
(72) Inventor: MIURA, Yoshitaka, Atsugi-shi, Kanagawa 243--0123 (JP)
(74) Representative: Hoefer & Partner Patentanwälte mbB
(86) International application number: PCT/IB2020/000838
(87) International publication number: WO 2022/074413

(56) References cited:
- EP-A1- 2 345 829
- EP-A1- 3 453 548
- WO-A1-2017/217067
- CN-U- 202 879 229
- JP-A- 2010 195 378
- JP-A- 2011 025 911
- JP-A- 2017 202 735

## Description

### TECHNICAL FIELD

The present invention relates to a transaxle device.

### BACKGROUND ART

JP 2018-134937 A discloses a configuration of a transaxle device for a hybrid vehicle including an engine and a generator in which a primary side of a transmission and a gear for transmitting a rotational force to the generator are coaxially interposed on a rotary shaft of the engine.

### SUMMARY OF INVENTION

However, in JP 2018-134937 A, the primary side of the transmission is directly connected to the rotary shaft of the engine, and thus if the generator is disposed at a position overlapping with the transmission in a width direction of the vehicle, the generator interferes with the transmission. Therefore, it is necessary to dispose the generator at a position not overlapping with the transmission in the width direction of the vehicle, and as a result, it is impossible to set an interval between the engine and the generator in the width direction to be small, and vehicle mountability is reduced. EP 2 345 829 A1 discloses a transmission in which gears of a first gear group provided on a first auxiliary input shaft to which driving force of a main input shaft is transmitted via a first clutch and gears of a second gear group provided on a second auxiliary input shaft to which the driving force of the main input shaft is transmitted via an idle gear and a second clutch use in common gears of a third gear group provided on an output shaft.

Therefore, an object of the present invention is to provide a transaxle device with improved vehicle mountability by avoiding interference between a generator and a transmission and enabling setting of a small interval between the generator and an engine in a width direction.

The present invention is defined by the subject matter of the independent claim.

### BRIEF DESCRIPTION OF DRAWINGS

[FIG. 1] FIG. 1 is a skeleton diagram of a transaxle device according to the present embodiment.
[FIG. 2] FIG. 2 is a side view of the transaxle device according to the present embodiment.
[FIG. 3] FIG. 3 is a side view of FIG. 2 and more clearly shows meshing of gears.
[FIG. 4] FIG. 4 is a skeleton diagram of a transaxle device according to a comparative example.
[FIG. 5] FIG. 5 is a skeleton diagram of a transaxle device according to a modification of the present embodiment.

### DESCRIPTION OF EMBODIMENTS

Hereinafter, an embodiment of the present invention will be described with reference to the drawings.

### [Configuration of Present Embodiment]

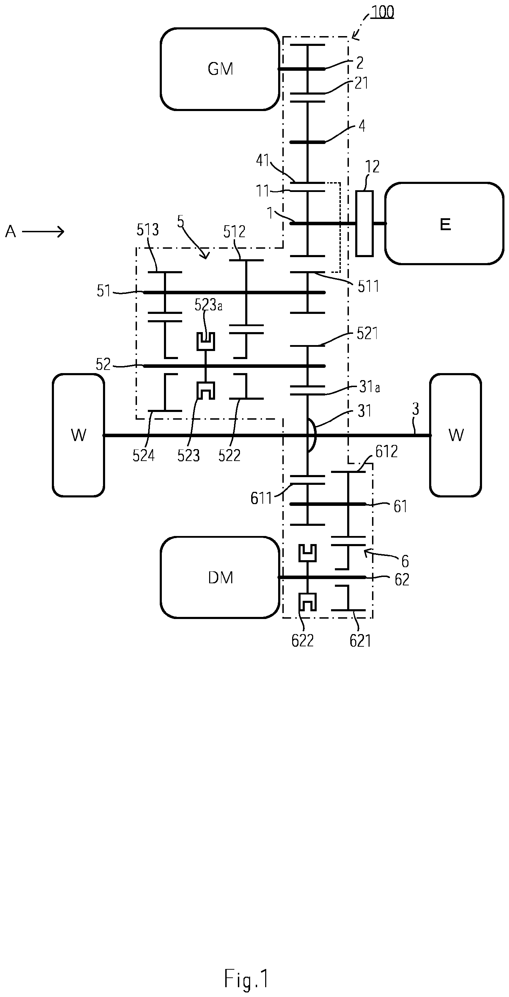

FIG. 1 is a skeleton diagram of a transaxle device 100 according to the present embodiment. The transaxle device 100 according to the present embodiment (a basic embodiment) is mounted on a vehicle (not shown). The vehicle is a hybrid vehicle equipped with an engine E, a generator motor GM (a first rotary electric machine) that generates electric power with a driving force of the engine E, and a drive motor DM (a second rotary electric machine) that receives electric power from a battery (not shown) for driving.

Traveling modes of the vehicle include an EV mode, a series mode, a parallel mode, and a direct connection mode. The EV mode is a traveling mode in which the vehicle is driven by the drive motor DM alone in a state where the engine E and the generator motor GM are stopped, and is applied when a traveling load or a traveling speed is low or when a charge level of the battery is high. The series mode is a traveling mode in which the generator motor GM is driven by the engine E to generate electric power, and the vehicle is driven by the drive motor DM using the electric power. The parallel mode is a traveling mode in which the vehicle is mainly driven by the engine E and the driving of the vehicle is assisted by the drive motor DM as necessary, and is applied when a traveling load or a traveling speed is high. The direct connection mode is a traveling mode in which the drive motor DM is disconnected from a drive shaft 3 of the vehicle, the vehicle is driven by the engine E and the generator motor GM is driven as necessary to assist the driving force. In a case of traveling the vehicle in reverse, the EV mode is selected, and the drive motor DM is rotated in a reverse direction.

The engine E is an internal combustion engine that burns gasoline or diesel oil, and an operating state thereof is controlled by an electronic control device (not shown).

Each of the generator motor GM and the drive motor DM is a motor-generator having both a function as a generator and a function as an electric motor. The drive motor DM mainly functions as an electric motor to drive the vehicle, and functions as a generator during regeneration. The generator motor GM functions as an electric motor (a starter) at the time of starting the engine E, and generates electric power with the driving force of the engine E when the engine E is in operation. Inverters (not shown) are interposed between the generator motor GM and the battery and between the drive motor DM and the battery, respectively. Rotation speeds (torques) of the generator motor GM and the drive motor DM are controlled by controlling the respective inverters. Operating states of the generator motor GM (an inverter) and the drive motor DM (an inverter) are controlled by the electronic control device.

In the vehicle, a rotary shaft 1 (a crank shaft) of the engine E, a rotary shaft 2 of the generator motor GM, a rotary shaft 62 of the drive motor DM, and the drive shaft 3 of drive wheels W are arranged in parallel to each other, but are not arranged coaxially, and are arranged at different positions. A damper 12 is interposed on the rotary shaft 1 of the engine E to attenuate torque fluctuations from the engine E and reduce a rattling noise of gears.

The transaxle device 100 transmits a driving force of the engine E or the drive motor DM to the drive shaft 3 of the drive wheels W and transmits the driving force of the engine E to the generator motor GM. The transaxle device 100 includes a differential gear 31 interposed on the drive shaft 3 and a final gear 31a interposed on the drive shaft 3 and meshing with the differential gear 31, and transmits the driving force of the engine E and the driving force of the drive motor DM to the drive shaft 3.

The rotary shaft 1 of the engine E (a portion of the rotary shaft 1 on a tip end side with respect to the damper 12), the rotary shaft 2 of the generator motor GM, the rotary shaft 62 of the drive motor DM, and the drive shaft 3 of the drive wheels W are interposed on the transaxle device 100.

The transaxle device 100 includes a first gear 11 interposed on the rotary shaft 1 of the engine E, and a second gear 21 interposed on the rotary shaft 2 of the generator motor GM. Here, the generator motor GM is disposed on a side opposite to the engine E across the first gear 11 in an axial direction of the rotary shaft 1 of the engine E. The first gear 11 and the second gear 21 are spatially separated from each other.

Each of the gears constituting the transaxle device 100 has a disc shape, and is formed with a gear groove on a side surface extending around a disc.

An intermediate gear 41 is disposed between the first gear 11 and the second gear 21. The intermediate gear 41 rotates about a rotary shaft 4 that is non-coaxial with and parallel to the rotary shaft 1 of the engine E and the rotary shaft 2 of the generator motor GM.

The intermediate gear 41 simultaneously meshes with the first gear 11 and the second gear 21. That is, the first gear 11 meshes with the intermediate gear 41, and the second gear 21 meshes with the intermediate gear 41 at a position in a circumferential direction of the intermediate gear 41 different from that of the first gear 11. Therefore, the first gear 11 and the second gear 21 are mechanically coupled to each other via the intermediate gear 41.

When the engine E is driven to rotate the first gear 11, the intermediate gear 41 rotates in a direction opposite to that of the first gear 11 to apply a driving force to the second gear 21. The second gear 21 receives the driving force of the intermediate gear 41 and rotates in the same direction as the first gear 11. A reduction ratio of the first gear 11 to the second gear 21 is D2/D1 regardless of a diameter of the intermediate gear 41, where D1 is a diameter of the first gear 11 and D2 is a diameter of the second gear 21.

A transmission 5 includes a rotary shaft 51 on a primary side and a rotary shaft 52 on a secondary side. The primary side of the transmission 5 is a rotation mechanism including a gear (a third gear 511) to which the driving force of the engine E is initially input, and includes the rotary shaft 51 supporting the third gear 511, and a seventh gear 512 and an eighth gear 513 supported by the rotary shaft 51. The secondary side of the transmission 5 is a rotation mechanism including a gear (a sixth gear 521) to which a torque from the drive shaft 3 is initially input, and includes the rotary shaft 52 supporting the sixth gear 521, and a second free rotatable gear 522, a second coupling member 523, and a third free rotatable gear 524 supported by the rotary shaft 52.

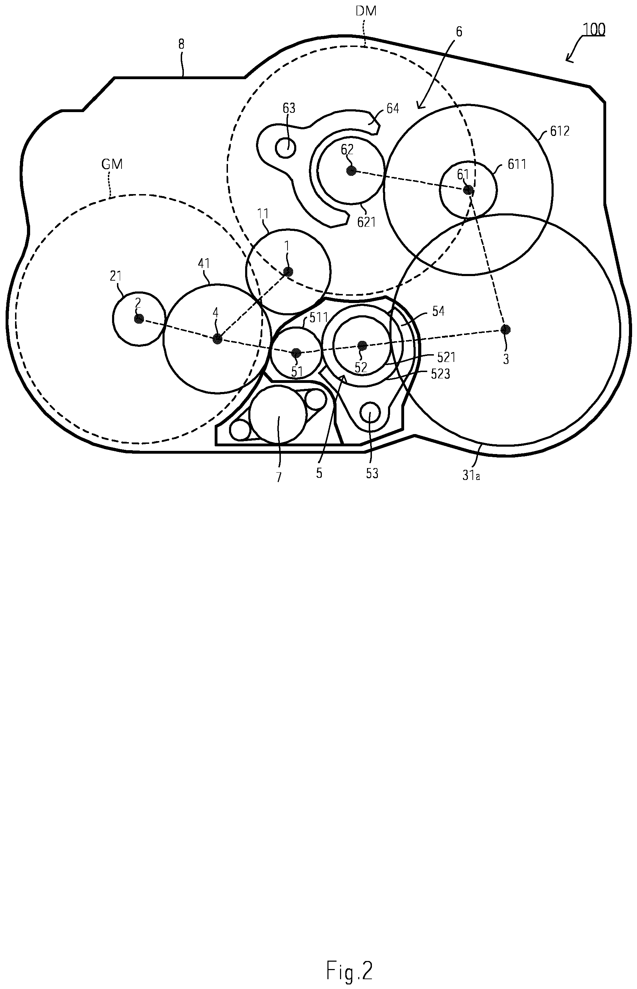

The third gear 511, the seventh gear 512, and the eighth gear 513 are interposed on the rotary shaft 51 on the primary side. The third gear 511 meshes with the intermediate gear 41 and meshes with the intermediate gear 41 at a position different in the circumferential direction from a meshing position between the first gear 11 and the intermediate gear 41 and a meshing position between the second gear 21 and the intermediate gear 41 (see FIG. 2 and the like). In FIG. 1, a diameter of the seventh gear 512 is set to be larger than a diameter of the eighth gear 513. A diameter ratio of the third gear 511 to the seventh gear 512 (and the eighth gear 513) can be set freely.

The sixth gear 521, the second free rotatable gear 522, the second coupling member 523, and the third free rotatable gear 524 are interposed on the rotary shaft 52 on the secondary side. The sixth gear 521 meshes with the final gear 31a meshing with the differential gear 31, and forms a final gear pair together with the final gear 31a. The second free rotatable gear 522 is interposed in a state of being capable of idling with respect to the rotary shaft 52 on the secondary side while meshing with the seventh gear 512. The third free rotatable gear 524 is interposed in a state of being capable of idling with respect to the rotary shaft 52 on the secondary side while meshing with the eighth gear 513. Here, a diameter of the third free rotatable gear 524 is set to be larger than a diameter of the second free rotatable gear 522.

In the axial direction of the rotary shaft 1 of the engine E, the third gear 511 and the sixth gear 521 are arranged at the same position as the first gear 11, and the seventh gear 512, the eighth gear 513, the second free rotatable gear 522, the second coupling member 523, and the third free rotatable gear 524 are arranged at a generator motor GM side with respect to the first gear 11.

The second coupling member 523 is interposed between the second free rotatable gear 522 and the third free rotatable gear 524 on the rotary shaft 52 on the secondary side. The second coupling member 523 is fixed with respect to a rotation direction of the rotary shaft 52 on the secondary side and is interposed in a slidable manner in an axial direction of the rotary shaft 52 on the secondary side. The second coupling member 523 slides in the axial direction by receiving a driving force from an actuator 7 (FIG. 2).

Although not shown, the second coupling member 523 (similar to a first coupling member 622) includes a lock mechanism. When the second coupling member 523 comes into contact with the second free rotatable gear 522, the lock mechanism operates to couple the second coupling member 523 to the second free rotatable gear 522, and when the second coupling member 523 comes into contact with the third free rotatable gear 524, the lock mechanism operates to couple the second coupling member 523 to the third free rotatable gear 524. When the second coupling member 523 is separated from the second free rotatable gear 522 or the third free rotatable gear 524, the lock mechanism can be released.

The second coupling member 523 can take a non-coupling state (neutral) in which the second coupling member 523 is connected to neither the second free rotatable gear 522 nor the third free rotatable gear 524, a first coupling state (HIGH) in which the second coupling member 523 is coupled to the second free rotatable gear 522 without being coupled to the third free rotatable gear 524 to set a rotation speed of the rotary shaft 52 on the secondary side to a high rotation speed, and a second coupling state (LOW) in which the second coupling member 523 is coupled to the third free rotatable gear 524 without being coupled to the second free rotatable gear 522 to set the rotation speed of the rotary shaft 52 on the secondary side to a low rotation speed.

In the non-coupling state (neutral), the rotary shaft 52 on the secondary side idles with respect to rotation of the rotary shaft 51 on the primary side, and thus the driving force of the engine E is not transmitted to the differential gear 31 (the drive shaft 3).

In the first coupling state (HIGH), the driving force of the engine E is transmitted to the final gear 31a (the drive shaft 3) via the first gear 11, the intermediate gear 41, the third gear 511, the seventh gear 512, the second free rotatable gear 522, and the sixth gear 521. At this time, a reduction ratio of the engine E to the drive shaft 3 is (D3·Df2·Dd)/(D1·D7·D6), where the diameter of the first gear 11 is D1, the diameter of the intermediate gear 41 is Dm, a diameter of the third gear 511 is D3, the diameter of the seventh gear 512 is D7, the diameter of the second free rotatable gear 522 is Df2, a diameter of the sixth gear 521 is D6, and a diameter of the final gear 31a is Dd.

In the second coupling state (LOW), the driving force of the engine E is transmitted to the final gear 31a (the drive shaft 3) via the first gear 11, the intermediate gear 41, the third gear 511, the eighth gear 513, the third free rotatable gear 524, and the sixth gear 521. At this time, a reduction ratio of the engine E to the drive shaft 3 is (D3·Df3·Dd)/(D1·D8·D6), where the diameter of the eighth gear 513 is D8, and the diameter of the third free rotatable gear 524 is Df3.

The drive motor DM is connected to the final gear 31a via the connection and disconnection mechanism 6. The drive motor DM is disposed at the generator motor GM side with respect to the final gear 31a in the axial direction of the rotary shaft 1 of the engine E.

The connection and disconnection mechanism 6 transmits the driving force of the drive motor DM to the final gear 31a at a predetermined reduction ratio, and connects or disconnects the transmission of the driving force. The connection and disconnection mechanism 6 includes a fourth gear 611 that meshes with the final gear 31a and meshes with the final gear 31a at a position different in the circumferential direction from a meshing position between the final gear 31a and the sixth gear 521, a fifth gear 612 that rotates coaxially with the fourth gear 611 (a rotary shaft 61 on a secondary side of the connection and disconnection mechanism 6), a first free rotatable gear 621 that is interposed on the rotary shaft 62 of the drive motor DM (a rotary shaft on a primary side of the connection and disconnection mechanism 6) while meshing with the fifth gear 612, and the first coupling member 622 (a coupling member) that is disposed on the rotary shaft 62 of the drive motor DM.

The first free rotatable gear 621 idles with respect to the rotary shaft 62 of the drive motor DM when not coupled to the first coupling member 622, and is coupled to the rotary shaft 62 of the drive motor DM by being coupled to the first coupling member 622, and rotates as the rotary shaft 62 rotates.

The first coupling member 622 is, for example, a movable member that is fixed in a rotation direction of the rotary shaft 62 of the drive motor DM and is slidable in an axial direction, and is slidable in the axial direction by receiving a driving force from an actuator (not shown).

Here, when the first coupling member 622 is at a position separated from the first free rotatable gear 621, the first free rotatable gear 621 is in a state of idling with respect to the rotary shaft 62 of the drive motor DM, and when the first coupling member 622 reaches a position coupled to the first free rotatable gear 621, the first coupling member 622 couples the first free rotatable gear 621 to the rotary shaft 62 of the drive motor DM.

The rotary shaft 61 supporting the fourth gear 611 and the fifth gear 612 rotates in a direction opposite to that of the rotary shaft 62 of the drive motor DM, and also rotates in a direction opposite to that of the final gear 31a (the drive shaft 3), and thus the rotary shaft 62 of the drive motor DM rotates in the same direction as the final gear 31a (the drive shaft 3).

A reduction ratio of the rotary shaft 62 of the drive motor DM to the drive shaft 3 of the drive wheels W is (D5·Dd)/(Df1·D4), where a diameter of the first free rotatable gear 621 is Df1, a diameter of the fifth gear 612 is D5, a diameter of the fourth gear 611 is D4, and the diameter of the final gear 31a is Dd.

As shown in FIG. 1, in the axial direction of the rotary shaft 1 of the engine E, the first gear 11, the second gear 21, the intermediate gear 41, the third gear 511, the sixth gear 521, the final gear 31a, the fourth gear 611, and the first coupling member 622 (when not coupled) form the same plane. That is, a plurality of the gears described above can be arranged within a range of a thickness of one gear. Accordingly, a dimension of the transaxle device 100 (a housing 8 in FIG. 2) in a width direction of the vehicle can be set to be small.

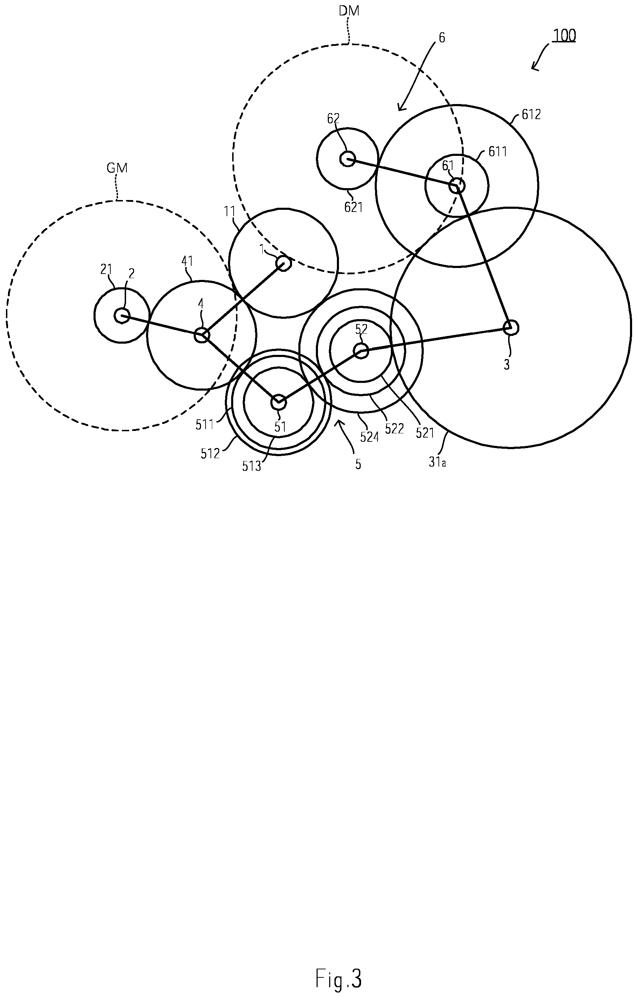

FIG. 2 is a side view of the transaxle device 100 according to the present embodiment. FIG. 3 is a side view of FIG. 2 and more clearly shows meshing of gears. FIGS. 2 and 3 are views taken in a direction of an arrow A in FIG. 1.

As shown in FIG. 2, the transaxle device 100 accommodates the first gear 11, the second gear 21, the intermediate gear 41, the transmission 5, the final gear 31a, and the connection and disconnection mechanism 6 in the housing 8.

The housing 8 as a whole is formed thin enough to accommodate the first gear 11, the second gear 21, the intermediate gear 41, the third gear 511, the sixth gear 521, the final gear 31a, the fourth gear 611, and the first coupling member 622 (when not coupled) in the axial direction of the engine E (the width direction of the vehicle) (see FIG. 1). However, the housing 8 has a shape protruding to a front side of a paper surface in a portion that accommodates the transmission 5 (and the actuator 7 for the transmission 5 and the like), and has a shape protruding to a back side of the paper surface in a portion that accommodates the connection and disconnection mechanism 6.

In FIGS. 2 and 3, the engine E (not shown) is disposed on the back side of the paper surface, the generator motor GM and the drive motor DM are arranged on the front side of the paper surface, and both of which are arranged outside the housing 8.

The drive shaft 3 of the drive wheels W penetrates through the housing 8, and is rotatably supported by a shaft bearing such as a bearing in the penetrating portion. The rotary shaft 1 of the engine E, the rotary shaft 2 of the generator motor GM, and the rotary shaft 62 of the drive motor DM penetrate through the housing 8, and tip ends thereof are arranged inside the housing 8. Each of the rotary shafts is rotatably supported by shaft bearings at a penetrating portion and a tip end portion thereof, and the shaft bearings are supported by the housing 8. The rotary shaft 4 supporting the intermediate gear 41, the rotary shaft 51 on the primary side of the transmission 5, the rotary shaft 52 on the secondary side of the transmission 5, and the rotary shaft 61 on the secondary side of the connection and disconnection mechanism 6 are each provided with shaft bearings such as bearings at both ends thereof, and the shaft bearings are supported by the housing 8.

The rotary shaft 2 of the generator motor GM and the drive shaft 3 of the drive wheels W are arranged on a lower side of the housing 8 at both end sides in a front-rear direction of the vehicle (a left-right direction in FIGS. 2 and 3). The transmission 5 is disposed at a position between the rotary shaft 2 of the generator motor GM and the drive shaft 3 of the drive wheels W on the lower side of the housing 8.

The rotary shaft 1 of the engine E is disposed at a central portion of the housing 8 in a height direction and at a position slightly biased toward a rotary shaft 2 side of the generator motor GM. The rotary shaft 4 of the intermediate gear 41 is disposed between the rotary shaft 2 of the generator motor GM and the rotary shaft 51 on the primary side of the transmission 5, and is disposed at a position closer to the rotary shaft 1 of the engine E.

The rotary shaft 62 of the drive motor DM (the rotary shaft on the secondary side of the connection and disconnection mechanism 6) is disposed at a position in an upper portion of the housing 8 and above the transmission 5. The rotary shaft 61 on the secondary side of the connection and disconnection mechanism 6 is disposed between the rotary shaft 62 of the drive motor DM and the drive shaft 3 of the drive wheels W.

It is necessary to dispose a portion of the housing 8 that accommodates the transmission 5 (and the actuator 7 for the transmission 5) without interfering with the generator motor GM. Therefore, in FIGS. 2 and 3, when viewed from a direction of viewing the housing 8 (the axial direction of the rotary shaft 1 of the engine E), a position where the intermediate gear 41 and the third gear 511 mesh with each other is located outside an outline (a circular outline) of the generator motor GM.

The rotary shaft 51 on the primary side of the transmission 5 is disposed at a position lower than the rotary shaft 2 of the generator motor GM. Accordingly, a part of the seventh gear 512 or the eighth gear 513 (a portion of the housing 8 that accommodates the seventh gear 512 and the eighth gear 513) overlaps with the generator motor GM in a plan view (from a viewpoint of FIG. 1). Accordingly, a dimension of the transaxle device 100 in the front-rear direction of the vehicle can be set to be small.

The actuator 7 for the transmission 5 is disposed at a position below the transmission 5 in the housing 8, and is disposed such that a part thereof overlaps with the outline of the generator motor GM in a plan view. Accordingly, an internal space of the housing 8 can be effectively used, and a dimension of the housing 8 in the front-rear direction of the vehicle can be set to be small.

The transmission 5 is provided with a cylindrical cam (not shown) rotated by the actuator 7, a shift rod 53 moving in an axial direction of a cylinder by a rotation operation of the cylindrical cam (not shown), and an arm 54 supported by the shift rod 53. The cylindrical cam (not shown) is disposed such that an axial direction thereof is parallel to the rotary shaft 52 on the secondary side of the transmission 5. Therefore, the shift rod 53 moves in the axial direction of the rotary shaft 52 due to the rotation operation of the cylindrical cam. As shown in FIG. 1, a groove 523a concentric with the rotary shaft 52 is formed in an outer circumference of the second coupling member 523 (similar to the first coupling member 622), and a tip end of the arm 54 enters the groove 523a. Therefore, when the arm 54 moves in the axial direction, the second coupling member 523 moves in the axial direction of the rotary shaft 52.

The housing 8 includes the actuator (not shown) for moving the first coupling member 622 of the connection and disconnection mechanism 6, a shift rod 63, and an arm 64, similar to the transmission 5.

Height positions of the drive motor DM and the rotary shaft 62 are adjusted so as not to interfere with the portion of the housing 8 that accommodates the transmission 5.

As shown in FIGS. 2 and 3, driving force transmission paths include a first transmission path for transmission from the rotary shaft 1 of the engine E to the rotary shaft 2 of the generator motor GM via the rotary shaft 4 of the intermediate gear 41, a second transmission path for transmission from the rotary shaft 1 of the engine E to the final gear 31a (the drive shaft 3) via the rotary shaft 4 of the intermediate gear 41 and the transmission 5 (the rotary shaft 51 and the rotary shaft 52), and a third transmission path for transmission from the drive motor DM to the final gear 31a (the drive shaft 3) via the connection and disconnection mechanism 6 (the rotary shaft 62 and the rotary shaft 61).

In the present embodiment, the third transmission path overlaps with the second transmission path in a plan view, and thus the dimension of the transaxle device 100 in the front-rear direction of the vehicle can be set to be small.

### <Comparative Example>

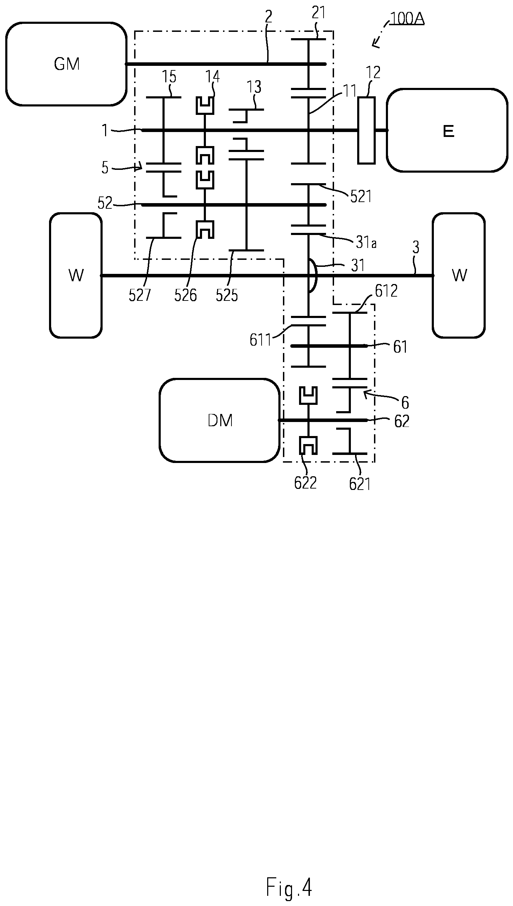

FIG. 4 is a skeleton diagram of a transaxle device 100A according to a comparative example. The comparative example in FIG. 4 is similar to that disclosed in JP 2018-134937 A described above. The transaxle device 100A according to the comparative example does not include the intermediate gear 41 in the present embodiment, and the first gear 11 and the second gear 21 directly mesh with each other. Further, in the transaxle device 100A according to the comparative example, the rotary shaft 1 of the engine E also serves as a rotary shaft on the primary side of the transmission 5.

The first gear 11, a fourth free rotatable gear 13, a third coupling member 14, and a ninth gear 15 are interposed on the rotary shaft 1 of the engine E (the rotary shaft on the primary side of the transmission 5). The sixth gear 521, a tenth gear 525, a fourth coupling member 526, and a fifth free rotatable gear 527 are interposed on the rotary shaft 52 on the secondary side of the transmission 5.

The fourth free rotatable gear 13 is interposed on the rotary shaft 1 of the engine E in a state of being capable of idling with respect to the rotary shaft 1 while meshing with the tenth gear 525. The fifth free rotatable gear 527 is interposed on the rotary shaft 52 on the secondary side in a state of being capable of idling with respect to the rotary shaft 52 on the secondary side while meshing with the ninth gear 15.

The third coupling member 14 has a structure similar to that of the first coupling member 622, and couples the fourth free rotatable gear 13 to the rotary shaft 1 by being coupled to the fourth free rotatable gear 13. The fourth coupling member 526 also has a structure similar to that of the first coupling member 622, and couples the fifth free rotatable gear 527 to the rotary shaft 52 by being coupled to the fifth free rotatable gear 527.

Here, a diameter of the fourth free rotatable gear 13 is set to be smaller than a diameter of the tenth gear 525, and a diameter of the fifth free rotatable gear 527 is set to be substantially equal to a diameter of the ninth gear 15. Therefore, the transmission 5 becomes LOW in a state where the third coupling member 14 is coupled to the fourth free rotatable gear 13 and the fourth coupling member 526 is separated from the fifth free rotatable gear 527, and becomes HIGH in a state where the fourth coupling member 526 is coupled to the fifth free rotatable gear 527 and the third coupling member 14 is separated from the fourth free rotatable gear 13. The transmission 5 is in a non-transmitting state (neutral) when the third coupling member 14 is separated from the fourth free rotatable gear 13 and the fourth coupling member 526 is separated from the fifth free rotatable gear 527.

In the comparative example, the first gear 11, the fourth free rotatable gear 13, the third coupling member 14, and the ninth gear 15 are interposed on the rotary shaft 1 of the engine E. Therefore, it is necessary to set the rotary shaft 1 of the engine E to be longer by thicknesses of the fourth free rotatable gear 13, the third coupling member 14, and the ninth gear 15, compared to the present embodiment. In the transaxle device 100A, four gear trains are necessary in an axial direction, and it is necessary to form the housing 8 to accommodate the gear trains.

Further, the transmission 5 (and the portion of the housing 8 that accommodates the transmission 5) is disposed closer to the generator motor GM side than in the present embodiment. Therefore, if the generator motor GM is disposed at the same position as the transmission 5 in the axial direction (the width direction of the vehicle), the generator motor GM interferes with the transmission 5. Therefore, as shown in FIG. 4, it is necessary to dispose the generator motor GM at a position not overlapping with the transmission 5 in the axial direction. However, in this arrangement, it is necessary to set a distance between the engine E and the generator motor GM to be long, and there is a problem that vehicle mountability of the transaxle device 100A is reduced accordingly.

On the other hand, as shown in FIG. 1, in the transaxle device 100 according to the present embodiment, the transmission 5 is not incorporated into the rotary shaft 1 of the engine E, and the transmission 5 (the third gear 511) is mechanically coupled to the first gear 11 via the intermediate gear 41. Accordingly, the transmission 5 can be disposed at a position separated from the rotary shaft 1 of the engine E, and the generator motor GM can be disposed at a position overlapping with the transmission 5 in the axial direction (the width direction of the vehicle), and thus a distance in the axial direction between the generator motor GM and the engine E can be set to be short, and vehicle mountability can be improved.

### <Modification>

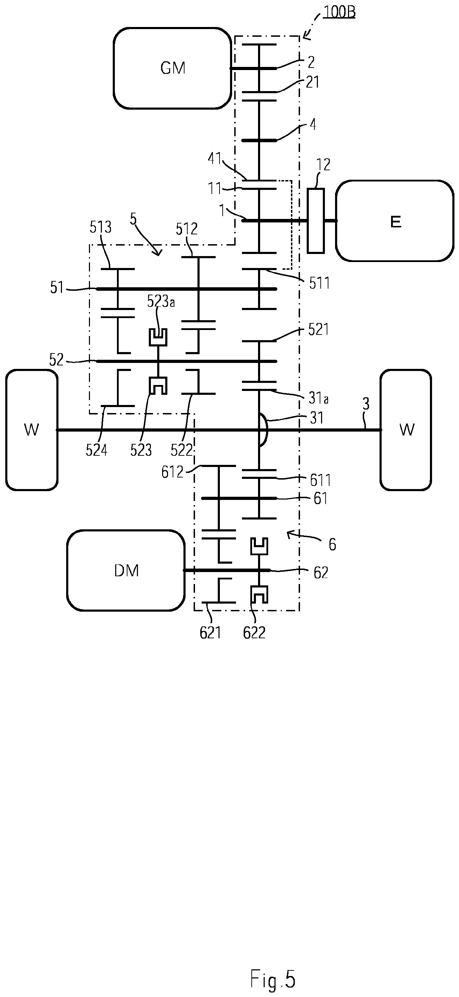

FIG. 5 is a skeleton diagram of a transaxle device 100B according to a modification of the present embodiment. The transaxle device 100B according to the modification has the same configuration as the transaxle device 100 shown in FIG. 1 and the like, but has a different arrangement of the connection and disconnection mechanism 6. That is, the connection and disconnection mechanism 6 as a whole is disposed at a position at a drive motor DM side with respect to the final gear 31a in the axial direction (the width direction of the vehicle).

In the connection and disconnection mechanism 6, the fourth gear 611 is connected to the final gear 31a, and the fifth gear 612 rotating coaxially with the fourth gear 611 is disposed at the drive motor DM side with respect to the fourth gear 611 in the axial direction. The first free rotatable gear 621 is interposed on the rotary shaft 62 of the drive motor DM in a state of being capable of idling while meshing with the fifth gear 612. The first coupling member 622 is interposed on the rotary shaft 62 of the drive motor DM so as to sandwich the first free rotatable gear 621 together with the drive motor DM.

As shown in FIG. 2, the drive motor DM is disposed at a position substantially directly above the transmission 5, and at this time, the connection and disconnection mechanism 6 is disposed at an engine E side with respect to the first gear 11 in the axial direction, and thus the connection and disconnection mechanism 6 may interfere with the engine E or an auxiliary machine or the like for the engine E.

In contrast, in the modification shown in FIG. 5, the connection and disconnection mechanism 6 is disposed at the drive motor DM side with respect to the final gear 31a in the axial direction. Accordingly, even if the drive motor DM is disposed at a position substantially directly above the transmission 5 as in FIG. 2, the connection and disconnection mechanism 6 is disposed at the drive motor DM side with respect to the first gear 11 in the axial direction, and thus it is possible to avoid the interference with the engine E or the auxiliary machine or the like for the engine E.

### <Effects of Present Embodiment>

The transaxle device 100 according to the present embodiment is interposed between the internal combustion engine (the engine E), the first rotary electric machine (the generator motor GM) that generates electric power with the driving force of the internal combustion engine (the engine E), and the drive shaft 3 of the drive wheels W, wherein the transaxle device 100 includes the transmission 5 configured to change a rotating ratio of a rotary shaft 1 of the internal combustion engine (the engine E) to the drive shaft 3. The transaxle device 100 includes the first gear 11 interposed on the rotary shaft 1 of the internal combustion engine (the engine E), the second gear 21 interposed on the rotary shaft 2 of the first rotary electric machine (the generator motor GM), and the third gear 511 interposed on the rotary shaft 51 on the primary side of the transmission 5. The intermediate gear 41 is interposed such that the intermediate gear 41 meshes with the first gear 11 and the second gear 21, receives the driving force of the internal combustion engine (the engine E) from the first gear 11 and rotates to transmit the driving force of the internal combustion engine (the engine E) to the second gear 21. As the third gear 511 meshes with the intermediate gear 41, the driving force of the internal combustion engine (the engine E) is transmitted to the transmission 5 via the intermediate gear 41.

With the above configuration, only the first gear 11 is interposed on the rotary shaft 1 of the engine E, and thus a length of the rotary shaft 1 of the engine E can be reduced. The transmission 5 can be disposed non-coaxially with the rotary shaft 1 of the engine E, and thus the generator motor GM and the transmission 5 can be arranged at positions overlapping with each other in the axial direction of the rotary shaft 1. Accordingly, the distance in the axial direction between the engine E and the generator motor GM can be set to be short, and thus the vehicle mountability of the transaxle device 100 can be improved.

In the present embodiment, the first gear 11, the second gear 21, and the intermediate gear 41 are arranged at the same position as the first gear 11 in the axial direction of the internal combustion engine (the engine E). Accordingly, the first gear 11, the second gear 21, and the intermediate gear 41 can be arranged within a range of a thickness of one gear, and a dimension in an axial direction of the transaxle device 100 can be set to be small, and thus the vehicle mountability of the transaxle device 100 can be further improved.

In the present embodiment, the position where the intermediate gear 41 and the third gear 511 mesh with each other is located outside the outline of the first rotary electric machine (the generator motor GM) when viewed from the axial direction of the first rotary electric machine (the generator motor GM). Accordingly, it is possible to avoid the interference between the generator motor GM and the transmission 5.

In the present embodiment, the first rotary electric machine (the generator motor GM) is disposed on the side opposite to the internal combustion engine (the engine E) across the first gear 11 in the axial direction of the internal combustion engine (the engine E), and the transmission 5 is disposed on a side opposite to the internal combustion engine (the engine E) across the first gear 11 in the axial direction of the internal combustion engine (the engine E) and at a position overlapping with the first rotary electric machine (the generator motor GM) in a plan view. Accordingly, by setting a dimension in a direction perpendicular to the axial direction of the transaxle device 100 (the front-rear direction of the vehicle) to be small, the vehicle mountability of the transaxle device 100 can be improved.

In the present invention, the transaxle device 100 is configured to be mounted on a hybrid vehicle including the internal combustion engine (the engine E), the first rotary electric machine (the generator motor GM), and the second rotary electric machine (the drive motor DM) that transmits the driving force to the drive shaft 3. The transaxle device 100 further includes the final gear 31a interposed on the drive shaft 3, and the connection and disconnection mechanism 6 interposed between the second rotary electric machine (the drive motor DM) and the final gear 31a and configured to connect or disconnect the transmission of the driving force of the second rotary electric machine (the drive motor DM). The connection and disconnection mechanism 6 overlaps with the transmission 5 in a plan view. Accordingly, the drive motor DM is disposed between the generator motor GM and the drive shaft 3 in the front-rear direction of the vehicle, and can be disposed at a position overlapping with the transmission 5 in a plan view, and the dimension of the transaxle device 100 in the front-rear direction of the vehicle can be set to be small.

In the present embodiment, the sixth gear 521 meshing with the final gear 31a is interposed on the rotary shaft 52 on the secondary side of the transmission 5. The connection and disconnection mechanism 6 includes the fourth gear 611 meshing with the final gear 31a, the fifth gear 612 configured to rotate coaxially with the fourth gear 611, the first free rotatable gear 621 interposed on the rotary shaft 62 of the second rotary electric machine (the drive motor DM) in a state of being capable of idling with respect to the rotary shaft 62 of the second rotary electric machine (the drive motor DM) while meshing with the fifth gear 612, and the first coupling member 622 configured to couple the first free rotatable gear 621 to the rotary shaft 62 of the second rotary electric machine (the drive motor DM). The final gear 31a, the fourth gear 611, and the sixth gear 521 are arranged at the same position as the first gear 11 in the axial direction of the internal combustion engine (the engine E). Accordingly, the dimension of the transaxle device 100 connected to the drive motor DM in the width direction of the vehicle can be set to be small.

In the present embodiment, the fifth gear 612 and the first free rotatable gear 621 are arranged at the internal combustion engine (the engine E) side with respect to the first gear 11 in the axial direction of the internal combustion engine (the engine E). Accordingly, a distance between the drive motor DM and the internal combustion engine (the engine E) can be set to be short in the width direction of the vehicle, and thus the vehicle mountability of the transaxle device 100 can be improved.

In the present embodiment, the rotary shaft 51 on the primary side of the transmission 5 is further provided with the seventh gear 512, and the eighth gear 513 having a smaller diameter than the seventh gear 512. The rotary shaft 52 on the secondary side of the transmission 5 is further provided with the second free rotatable gear 522 interposed on the rotary shaft 52 on the secondary side of the transmission 5 in a state of being capable of idling with respect to the rotary shaft 52 on the secondary side of the transmission 5 while meshing with the seventh gear 512, the third free rotatable gear 524 interposed on the rotary shaft 52 on the secondary side of the transmission 5 in a state of being capable of idling with respect to the rotary shaft 52 on the secondary side of the transmission 5 while meshing with the eighth gear 513, and the second coupling member 523 configured to couple the second free rotatable gear 522 to the rotary shaft 52 on the secondary side of the transmission 5 in a state of idling the third free rotatable gear 524 with respect to the rotary shaft 52 on the secondary side of the transmission 5, or couple the third free rotatable gear 524 to the rotary shaft 52 on the secondary side of the transmission 5 in a state of idling the second free rotatable gear 522 with respect to the rotary shaft 52 on the secondary side of the transmission 5. Accordingly, the transmission 5 can be built with a simple configuration.

Although the embodiment of the present invention has been described above, the above embodiment is merely a part of application examples of the present invention, and does not mean that the technical scope of the present invention is limited to the specific configurations of the above embodiment. For example, as the transmission 5, a continuously variable transmission such as a continuously variable transmission (CVT) can be applied in addition to a transmission capable of selecting two states of HIGH and LOW as described above.

## Claims

1. A transaxle device (100) which is interposed between an internal combustion engine (E), a first rotary electric machine (GM) that generates electric power with a driving force of the internal combustion engine (E), and a drive shaft (3) of a drive wheel (W), wherein the transaxle device (100) includes a transmission (5) configured to change a rotating ratio of a rotary shaft (1) of the internal combustion engine (E) to the drive shaft (3), the transaxle device (100) comprising:
a first gear (11) interposed on the rotary shaft (1) of the internal combustion engine (E);
a second gear (21) interposed on a rotary shaft (2) of the first rotary electric machine (GM); and
a third gear (511) interposed on a rotary shaft (51) on a primary side of the transmission (5), wherein
an intermediate gear (41) is interposed such that the intermediate gear (41) meshes with the first gear (11) and the second gear (21), receives the driving force of the internal combustion engine (E) from the first gear (11) and rotates to transmit the driving force of the internal combustion engine (E) to the second gear (21), and
as the third gear (511) meshes with the intermediate gear (41), the driving force of the internal combustion engine (E) is transmitted to the transmission (5) via the intermediate gear (41),
wherein the transaxle device (100) is conf igured to be mounted on a hybrid vehicle including the internal combustion engine (E), the first rotary electric machine (GM), and a second rotary electric machine (DM) that transmits a driving force to the drive shaft (3), the transaxle device (100) further comprising:
a final gear (31a) interposed on the drive shaft (3); and
a connection and disconnection mechanism (6) interposed between the second rotary electric machine (DM) and the final gear (31a) and configured to connect or disconnect transmission of a driving force of the second rotary electric machine (DM), wherein
the connection and disconnection mechanism (6) overlaps with the transmission (5) in a plan view.

2. The transaxle device (100) according to claim 1, wherein
the first gear (11), the second gear (21), and the intermediate gear (41) are arranged at the same position as the first gear (11) in an axial direction of the internal combustion engine (E).

3. The transaxle device (100) according to claim 1 or 2, wherein
a position where the intermediate gear (41) and the third gear (511) mesh with each other is located outside an outline of the first rotary electric machine (GM) when viewed from an axial direction of the first rotary electric machine (GM).

4. The transaxle device (100) according to any one of claims 1 to 3, wherein
the first rotary electric machine (GM) is disposed on a side opposite to the internal combustion engine (E) across the first gear (11) in an axial direction of the internal combustion engine (E), and
the transmission (5) is disposed on a side opposite to the internal combustion engine (E) across the first gear (11) in the axial direction of the internal combustion engine (E) and at a position overlapping with the first rotary electric machine (GM) in a plan view.

5. The transaxle device (100) according to any of the preceding claims, wherein
a sixth gear (521) meshing with the final gear (31a) is interposed on a rotary shaft (52) on a secondary side of the transmission (5),
the connection and disconnection mechanism (6) includes
a fourth gear (611) meshing with the final gear (31a),
a fifth gear (612) configured to rotate coaxially with the fourth gear (611),
a first free rotatable gear (621) interposed on a rotary shaft (62) of the second rotary electric machine (DM) in a state of being capable of idling with respect to the rotary shaft (62) of the second rotary electric machine (DM) while meshing with the fifth gear (612), and
a first coupling member (622) configured to couple the first free rotatable gear (621) to the rotary shaft (62) of the second rotary electric machine (DM), and
the final gear (31a), the fourth gear (611), and the sixth gear (521) are arranged at the same position as the first gear (11) in an axial direction of the internal combustion engine (E).

6. The transaxle device (100) according to claim 5, wherein
the fifth gear (612) and the first free rotatable gear (622) are arranged at an internal combustion engine (E) side with respect to the first gear (11) in the axial direction of the internal combustion engine (E).

7. The transaxle device (100) according to any one of claims 1 to 6, wherein
the rotary shaft (51) on the primary side of the transmission (5) is further provided with
a seventh gear (512), and
an eighth gear (513) having a smaller diameter than the seventh gear (512), and
a rotary shaft (52) on a secondary side of the transmission (5) is further provided with
a second free rotatable gear (522) interposed on the rotary shaft (52) on the secondary side of the transmission (5) in a state of being capable of idling with respect to the rotary shaft (52) on the secondary side of the transmission (5) while meshing with the seventh gear (512),
a third free rotatable gear (524) interposed on the rotary shaft (52) on the secondary side of the transmission (5) in a state of being capable of idling with respect to the rotary shaft (52) on the secondary side of the transmission (5) while meshing with the eighth gear (513), and
a second coupling member (523) configured to couple the second free rotatable gear (522) to the rotary shaft (52) on the secondary side of the transmission (5) in a state of idling the third free rotatable gear (524) with respect to the rotary shaft (52) on the secondary side of the transmission (5), or couple the third free rotatable gear (524) to the rotary shaft (52) on the secondary side of the transmission (5) in a state of idling the second free rotatable gear (522) with respect to the rotary shaft (52) on the secondary side of the transmission (5).

## Patentansprüche

1. Transaxlevorrichtung (100), die zwischen einem Verbrennungsmotor (E), einer ersten drehenden elektrischen Maschine (GM), die elektrische Leistung mit einer Antriebskraft des Verbrennungsmotors (E) erzeugt, und einer Antriebswelle (3) eines Antriebsrads (W) angeordnet ist, wobei die Transaxlevorrichtung (100) ein Getriebe (5) umfasst, das konfiguriert ist, ein Drehverhältnis einer Drehwelle (1) des Verbrennungsmotors (E) zu der Antriebswelle (3) zu ändern, wobei die Transaxlevorrichtung (100) Folgendes umfasst:
ein erstes Zahnrad (11), das auf der Drehwelle (1) des Verbrennungsmotors (E) angeordnet ist;
ein zweites Zahnrad (21), das auf einer Drehwelle (2) der ersten drehenden elektrischen Maschine (GM) angeordnet ist; und
ein drittes Zahnrad (511), das auf einer Drehwelle (51) auf einer Primärseite des Getriebes (5) angeordnet ist, wobei
ein Zwischenzahnrad (41) derart angeordnet ist, dass das Zwischenzahnrad (41) mit dem ersten Zahnrad (11) und dem zweiten Zahnrad (21) kämmt, die Antriebskraft des Verbrennungsmotors (E) von dem ersten Zahnrad (11) empfängt und sich dreht, um die Antriebskraft des Verbrennungsmotors (E) auf das zweite Zahnrad (21) zu übertragen, und
wenn das dritte Zahnrad (511) mit dem Zwischenzahnrad (41) kämmt, die Antriebskraft des Verbrennungsmotors (E) über das Zwischenzahnrad (41) auf das Getriebe (5) übertragen wird,
wobei die Transaxlevorrichtung (100) konfiguriert ist, an einem Hybridfahrzeug montiert zu werden, das den Verbrennungsmotor (E), die erste drehende elektrische Maschine (GM) und eine zweite drehende elektrische Maschine (DM) umfasst, die eine Antriebskraft auf die Antriebswelle (3) überträgt, wobei die Transaxlevorrichtung (100) ferner Folgendes umfasst:
ein Endzahnrad (31a), das auf der Antriebswelle (3) angeordnet ist; und
einen Verbindungs- und Trennungsmechanismus (6), der zwischen der zweiten drehenden elektrischen Maschine (DM) und dem Endzahnrad (31a) angeordnet ist und konfiguriert ist, die Übertragung einer Antriebskraft der zweiten drehenden elektrischen Maschine (DM) zu verbinden oder zu trennen, wobei
der Verbindungs- und Trennungsmechanismus (6) in einer Draufsicht mit dem Getriebe (5) überlappt.

2. Transaxlevorrichtung (100) nach Anspruch 1, wobei
das erste Zahnrad (11), das zweite Zahnrad (21) und das Zwischenzahnrad (41) an derselben Position wie das erste Zahnrad (11) in einer axialen Richtung des Verbrennungsmotors (E) angeordnet sind.

3. Transaxlevorrichtung (100) nach Anspruch 1 oder 2, wobei
eine Position, an der das Zwischenzahnrad (41) und das dritte Zahnrad (511) miteinander kämmen, bei Betrachtung aus einer axialen Richtung der ersten drehenden elektrischen Maschine (GM) außerhalb eines Umrisses der ersten drehenden elektrischen Maschine (GM) angeordnet ist.

4. Transaxlevorrichtung (100) nach einem der Ansprüche 1 bis 3, wobei
die erste drehende elektrische Maschine (GM) auf einer Seite gegenüber dem Verbrennungsmotor (E) über das erste Zahnrad (11) in einer axialen Richtung des Verbrennungsmotors (E) angeordnet ist, und
das Getriebe (5) auf einer Seite gegenüber dem Verbrennungsmotor (E) über das erste Zahnrad (11) in der axialen Richtung des Verbrennungsmotors (E) und an einer Position angeordnet ist, die mit der ersten drehenden elektrischen Maschine (GM) in einer Draufsicht überlappt.

5. Transaxlevorrichtung (100) nach einem der vorhergehenden Ansprüche, wobei
ein sechstes Zahnrad (521), das mit dem Endzahnrad (31a) kämmt, auf einer Drehwelle (52) auf einer Sekundärseite des Getriebes (5) angeordnet ist,
der Verbindungs- und Trennungsmechanismus (6) Folgendes umfasst:
ein viertes Zahnrad (611), das mit dem Endzahnrad (31a) kämmt,
ein fünftes Zahnrad (612), das konfiguriert ist, sich koaxial mit dem vierten Zahnrad (611) zu drehen,
ein erstes frei drehbares Zahnrad (621), das auf einer Drehwelle (62) der zweiten drehenden elektrischen Maschine (DM) in einem Zustand angeordnet ist, in dem es in Bezug auf die Drehwelle (62) der zweiten drehenden elektrischen Maschine (DM) im Leerlauf sein kann, während es mit dem fünften Zahnrad (612) kämmt, und
ein erstes Kopplungselement (622), das konfiguriert ist, das erste frei drehbare Zahnrad (621) mit der Drehwelle (62) der zweiten drehenden elektrischen Maschine (DM) zu koppeln, und
das Endzahnrad (31a), das vierte Zahnrad (611) und das sechste Zahnrad (521) an derselben Position wie das erste Zahnrad (11) in einer axialen Richtung des Verbrennungsmotors (E) angeordnet sind.

6. Transaxlevorrichtung (100) nach Anspruch 5, wobei
das fünfte Zahnrad (612) und das erste frei drehbare Zahnrad (622) an einer Seite des Verbrennungsmotors (E) in Bezug auf das erste Zahnrad (11) in der axialen Richtung des Verbrennungsmotors (E) angeordnet sind.

7. Transaxlevorrichtung (100) nach einem der Ansprüche 1 bis 6, wobei
die Drehwelle (51) auf der Primärseite des Getriebes (5) ferner versehen ist mit
einem siebten Zahnrad (512), und
einem achten Zahnrad (513), das einen kleineren Durchmesser als das siebte Zahnrad (512) aufweist, und
eine Drehwelle (52) auf einer Sekundärseite des Getriebes (5) ferner versehen ist mit
einem zweiten frei drehbaren Zahnrad (522), das auf der Drehwelle (52) auf der Sekundärseite des Getriebes (5) in einem Zustand angeordnet ist, in dem es in Bezug auf die Drehwelle (52) auf der Sekundärseite des Getriebes (5) im Leerlauf sein kann, während es mit dem siebten Zahnrad (512) kämmt,
einem dritten frei drehbaren Zahnrad (524), das auf der Drehwelle (52) auf der Sekundärseite des Getriebes (5) in einem Zustand angeordnet ist, in dem es in Bezug auf die Drehwelle (52) auf der Sekundärseite des Getriebes (5) im Leerlauf sein kann, während es mit dem achten Zahnrad (513) kämmt, und
einem zweiten Kopplungselement (523), das konfiguriert ist, das zweite frei drehbare Zahnrad (522) mit der Drehwelle (52) auf der Sekundärseite des Getriebes (5) in einem Zustand zu koppeln, in dem das dritte frei drehbare Zahnrad (524) in Bezug auf die Drehwelle (52) auf der Sekundärseite des Getriebes (5) im Leerlauf ist, oder das dritte frei drehbare Zahnrad (524) mit der Drehwelle (52) auf der Sekundärseite des Getriebes (5) in einem Zustand zu koppeln, in dem das zweite frei drehbare Zahnrad (522) in Bezug auf die Drehwelle (52) auf der Sekundärseite des Getriebes (5) im Leerlauf ist.

## Revendications

1. Dispositif de boîte-pont (100) qui est interposé entre un moteur à combustion interne (E), une première machine électrique rotative (GM) qui génère de l'énergie électrique avec une force d'entraînement du moteur à combustion interne (E), et un arbre d'entraînement (3) d'une roue motrice (W), dans lequel le dispositif de boîte-pont (100) comprend une transmission (5) configurée pour changer un rapport de rotation d'un arbre rotatif (1) du moteur à combustion interne (E) à l'arbre d'entraînement (3), le dispositif de boîte-pont (100) comprenant :
un premier engrenage (11) interposé sur l'arbre rotatif (1) du moteur à combustion interne (E) ;
un deuxième engrenage (21) interposé sur un arbre rotatif (2) de la première machine électrique rotative (GM) ; et
un troisième engrenage (511) interposé sur un arbre rotatif (51) sur un côté primaire de la transmission (5), dans lequel
un engrenage intermédiaire (41) est interposé de sorte que l'engrenage intermédiaire (41) s'engrène avec le premier engrenage (11) et le deuxième engrenage (21), reçoit la force d'entraînement du moteur à combustion interne (E) à partir du premier engrenage (11) et tourne pour transmettre la force d'entraînement du moteur à combustion interne (E) au deuxième engrenage (21), et
lorsque le troisième engrenage (511) s'engrène avec l'engrenage intermédiaire (41), la force d'entraînement du moteur à combustion interne (E) est transmise à la transmission (5) via l'engrenage intermédiaire (41),
dans lequel le dispositif de boîte-pont (100) est configuré pour être monté sur un véhicule hybride comprenant le moteur à combustion interne (E), la première machine électrique rotative (GM), et une seconde machine électrique rotative (DM) qui transmet une force d'entraînement à l'arbre d'entraînement (3), le dispositif de boîte-pont (100) comprenant en outre :
un engrenage final (31a) interposé sur l'arbre d'entraînement (3) ; et
un mécanisme de connexion et de déconnexion (6) interposé entre la seconde machine électrique rotative (DM) et l'engrenage final (31a) et configuré pour connecter ou déconnecter la transmission d'une force d'entraînement de la seconde machine électrique rotative (DM), dans lequel
le mécanisme de connexion et de déconnexion (6) chevauche la transmission (5) dans une vue en plan.

2. Dispositif de boîte-pont (100) selon la revendication 1, dans lequel
le premier engrenage (11), le deuxième engrenage (21), et l'engrenage intermédiaire (41) sont agencés à la même position que le premier engrenage (11) dans une direction axiale du moteur à combustion interne (E).

3. Dispositif de boîte-pont (100) selon la revendication 1 ou 2, dans lequel
une position où l'engrenage intermédiaire (41) et le troisième engrenage (511) s'engrènent l'un avec l'autre est située à l'extérieur d'un contour de la première machine électrique rotative (GM) lorsqu'elle est vue à partir d'une direction axiale de la première machine électrique rotative (GM).

4. Dispositif de boîte-pont (100) selon l'une quelconque des revendications 1 à 3, dans lequel
la première machine électrique rotative (GM) est disposée sur un côté opposé au moteur à combustion interne (E) à travers le premier engrenage (11) dans une direction axiale du moteur à combustion interne (E), et
la transmission (5) est disposée sur un côté opposé au moteur à combustion interne (E) à travers le premier engrenage (11) dans la direction axiale du moteur à combustion interne (E) et à une position chevauchant la première machine électrique rotative (GM) dans une vue en plan.

5. Dispositif de boîte-pont (100) selon l'une quelconque des revendications précédentes, dans lequel
un sixième engrenage (521) s'engrenant avec l'engrenage final (31a) est interposé sur un arbre rotatif (52) sur un côté secondaire de la transmission (5),
le mécanisme de connexion et de déconnexion (6) comprend
un quatrième engrenage (611) s'engrenant avec l'engrenage final (31a),
un cinquième engrenage (612) configuré pour tourner coaxialement avec le quatrième engrenage (611),
un premier engrenage libre rotatif (621) interposé sur un arbre rotatif (62) de la seconde machine électrique rotative (DM) dans un état de capacité de ralenti par rapport à l'arbre rotatif (62) de la seconde machine électrique rotative (DM) tout en s'engrenant avec le cinquième engrenage (612), et
un premier élément de couplage (622) configuré pour coupler le premier engrenage libre rotatif (621) à l'arbre rotatif (62) de la seconde machine électrique rotative (DM), et
l'engrenage final (31a), le quatrième engrenage (611), et le sixième engrenage (521) sont agencés à la même position que le premier engrenage (11) dans une direction axiale du moteur à combustion interne (E).

6. Dispositif de boîte-pont (100) selon la revendication 5, dans lequel
le cinquième engrenage (612) et le premier engrenage libre rotatif (622) sont agencés sur un côté de moteur à combustion interne (E) par rapport au premier engrenage (11) dans la direction axiale du moteur à combustion interne (E).

7. Dispositif de boîte-pont (100) selon l'une quelconque des revendications 1 à 6, dans lequel
l'arbre rotatif (51) sur le côté primaire de la transmission (5) est en outre pourvu
d'un septième engrenage (512), et
d'un huitième engrenage (513) ayant un diamètre plus petit que le septième engrenage (512), et
un arbre rotatif (52) sur un côté secondaire de la transmission (5) est en outre pourvu
d'un deuxième engrenage libre rotatif (522) interposé sur l'arbre rotatif (52) sur le côté secondaire de la transmission (5) dans un état de capacité de ralenti par rapport à l'arbre rotatif (52) sur le côté secondaire de la transmission (5) tout en s'engrenant avec le septième engrenage (512),
d'un troisième engrenage libre rotatif (524) interposé sur l'arbre rotatif (52) sur le côté secondaire de la transmission (5) dans un état de capacité de ralenti par rapport à l'arbre rotatif (52) sur le côté secondaire de la transmission (5) tout en s'engrenant avec le huitième engrenage (513), et
d'un second élément de couplage (523) configuré pour coupler le deuxième engrenage libre rotatif (522) à l'arbre rotatif (52) sur le côté secondaire de la transmission (5) dans un état de ralenti du troisième engrenage libre rotatif (524) par rapport à l'arbre rotatif (52) sur le côté secondaire de la transmission (5), ou coupler le troisième engrenage libre rotatif (524) à l'arbre rotatif (52) sur le côté secondaire de la transmission (5) dans un état de ralenti du deuxième engrenage libre rotatif (522) par rapport à l'arbre rotatif (52) sur le côté secondaire de la transmission (5).
